# EUROPÄISCHE PATENTANMELDUNG

(11) **EP 4 205 890 A1**
(43) Veröffentlichungstag der Anmeldung: **05.07.2023**
(21) Anmeldenummer: 22214307.5
(22) Anmeldetag: 16.12.2022
(51) Int. Cl.: B23C 1/10, B23C 3/12, B23C 5/08

(54) **FRAESERANORDNUNG**

(30) Priorität: 30.12.2021 DE 102021006421
(71) Anmelder: Urban GmbH & Co. Maschinenbau KG, 87700 Memmingen (DE)
(72) Erfinder: Geisler, Kenny, 87700 Memmingen (DE)
(74) Vertreter: Patentanwälte Olbricht, Buchhold, Keulertz Partnerschaft mbB

(57) **Zusammenfassung**

Eine Fräseranordnung (10), für die Bearbeitung eines Kunststoffprofils, hat eine Halterung (20), die zumindest entlang einer Raumrichtung (R1, R2) beweg- und positionierbar gelagert ist, zwei erste Fräser (30), die einander gegenüberliegend seitlich in der Halterung (20) angeordnet sind und um eine erste Rotationsachse (32) drehbar gelagert sind, sowie zumindest einen zweiten Fräser (40), der in oder an der Halterung (20) um eine zweite Rotationsachse (42) drehbar angeordnet und mit der Halterung (20) beweg- und positionierbar ist. Die zweite Rotationsachse (42) des zweiten Fräsers (40) ist in einem Winkel (α) zur ersten Rotationsachse (32) der ersten Fräser (30) ausgerichtet, wobei der Winkel (α) größer Null ist. Die zwei ersten Fräser (30) weisen in Richtung der ersten Rotationsachse (32) einen Breitenabstand (B3) auf, während die Halterung (20) in Richtung der ersten Rotationsachse (32) eine maximale Breite (B2) aufweist. Dabei ist der Breitenabstand (B3) der ersten Fräser (30) größer als die maximale Breite (B2) der Halterung (20). Der zweite Fräser (40) ist ein scheibenförmiges Fräsblatt mit umfangsseitig ausgebildeten Schneiden (44), wobei diese auf einem Schneidenkreis (46) liegen, der einen Durchmesser (D) aufweist, während der Fräser (40) in zwei seitlichen Bereichen (47, 48) abgeflacht ist und dort eine maximale Breite (B4) aufweist. Diese ist kleiner als der Durchmesser (D) des Schneidenkreises (46) sowie kleiner oder gleich dem Breitenabstand (B3) der ersten Fräser (30) ist. Ferner ist der Durchmesser (D) des Schneidenkreises (46) des zweiten Fräsers (40) größer als die maximale Breite (B2) der Halterung (20).

## Beschreibung

Die Erfindung betrifft eine Fräseranordnung gemäß Anspruch 1.

Tür- und Fensterrahmen aus Kunststoff werden gewöhnlich aus Kunststoffprofilen hergestellt. Diese werden entsprechend den Abmessungen der Tür oder des Fensters auf Länge zugeschnitten und an ihren freien Enden stirnseitig mit einer Gehrung versehen. Anschließend werden die Profile im Bereich dieser Gehrungsflächen in speziellen Maschinen miteinander verbunden, vorzugsweise miteinander verschweißt.

Vor dem Verbindungsvorgang werden die Gehrungsflächen der Profile, welche in der Maschine fest eingespannt und ausgerichtet sind, mittels einer Fräsvorrichtung präzise auf ein definiertes Endmaß gebracht, damit zwei gegenüberliegende Gehrungsflächen später präzise aneinander anliegen und für eine dauerhaft feste Verbindung sorgen. Nach dem Fräsvorgang werden die Gehrungsflächen mittels sogenannter Heizspiegel plastifiziert und die Profile durch Verpressen zu einem fertigen Rahmen verschweißt.

Die Fräsvorrichtung kann - wie DE 10 2016 104 806 A1 zeigt - als Fräsarm ausgebildet sein, der entlang definierter Bewegungsachsen zwischen den Gehrungsflächen zweier eingespannter Profile bewegt werden kann. Der Fräsarm trägt in einer Halterung an seinen den Gehrungsflächen zugewandten Seiten jeweils einen Fräser, beispielsweise einen Planfräser, einen Walzenfräser oder einen Stirnfräser, wobei die Rotationsachse der einander gegenüberliegenden Fräser senkrecht zur jeweiligen Gehrungsfläche steht. Die Abstände der Gehrungsflächen und die Abmessungen des Fräsarms sind derart bemessen, dass zwei sich gegenüberstehende Gehrungsflächen der Profile mit den Fräsern zeitgleich bearbeitet werden können.

Um weitere Bearbeitungsschritte an den Kunststoffprofilen ausführen zu können, ohne die eingespannten Profile lösen oder bewegen zu müssen, ist aus DE 10 2018 133 638 A1 bekannt, an der Fräsvorrichtung zusätzliche Abstechmesser anzubringen, die nach dem Aufschmelzen der Gehrungsflächen in den Kantenbereichen der Profile zum Einsatz kommen. Die Abstechmesser sind zu beiden Seiten des Fräsarms in je einer Messeraufnahme montiert, wobei jede Messeraufnahme mittels eines Antriebs von einer Ruheposition an dem Fräsarm in eine von diesem beabstandete Arbeitsposition gebracht werden kann. Eine solche Fräserkombination ist technisch aufwendig und oft im Einsatz beschränkt.

Alternativ zu den Abstechmessern können an dem Fräsarm zusätzlich pro Seite jeweils ein Fingerfräser vorgesehen sein, mit denen andere Fräsarbeiten an den Profilen ausgeführt werden können. Jeder Fingerfräser sitzt entweder koaxial auf dem Planfräser oder seitlich versetzt zu diesem. Eine solche Fräserkombination ist ebenfalls technisch aufwendig und im Einsatz beschränkt.

Ziel der Erfindung ist es, diese und weitere Nachteile des Standes der Technik zu überwinden und eine Fräsanordnung zu schaffen, die mit einfachen Mitteln kostengünstig aufgebaut ist und flexibel sowie vielfältig eingesetzt werden kann. Insbesondere sollen mit der Fräseranordnung weitere oder zusätzliche Aufgaben übernommen werden, ohne dass die Kunststoffprofile aus der Maschine entnommen werden müssen, und ohne dass ein Werkzeug oder ein Fräser gewechselt werden müssen. Angestrebt wird ferne ein schneller Wechsel zwischen den Aufgaben, so dass die Fräsanordnung wirtschaftlich und effizient einsetzbar ist.

Hauptmerkmale der Erfindung sind in Anspruch 1 angegeben. Ausgestaltungen sind Gegenstand der Ansprüche 2 bis 15.

Zur Lösung der Aufgabe wird eine Fräseranordnung für die Bearbeitung eines Kunststoffprofiles vorgeschlagen, mit einer Halterung, wobei die Halterung zumindest entlang einer Raumrichtung beweg- und positionierbar gelagert ist, mit zwei ersten Fräsern, die einander gegenüberliegend seitlich in der Halterung angeordnet und um eine erste Rotationsachse drehbar gelagert sind, und mit zumindest einen zweiten Fräser, der in oder an der Halterung um eine zweite Rotationsachse drehbar angeordnet und mit der Halterung beweg- und positionierbar ist, wobei die zweite Rotationsachse des zweiten Fräsers in einem Winkel zur ersten Rotationsachse der ersten Fräser ausgerichtet ist, wobei der Winkel größer Null ist.

Die Erfindung schlägt damit eine sehr variabel verwendbare und mit einfachen technischen Mitteln realisierbare Fräsanordnung vor, die äußerst flexibel einsetzbar ist. Während mit den ersten Fräsern die Stirn- oder Gehrungsflächen der zu verschweißenden Kunststoffprofile bearbeitet werden können, lassen sich mit dem zweiten Fräser weitere vielfältige Fräsaufgaben erledigen, ohne dass die Kunststoffprofile aus der Einspannung gelöst oder gar entnommen werden müssen. Auch müssen keine Fräswerkzeuge montiert oder gewechselt werden. Die zweite Rotationsachse des zweiten Fräsers ist zudem in einem Winkel zur ersten Rotationsachse ausgerichtet, so dass der zweite Fräser in einer Ebene arbeiten kann, welche von der Ebene abweicht, in welcher die ersten Fräser arbeiten.

Der zweite Fräser kann beispielsweise für die Bearbeitung einer Profilkante verwendet werden, also für die Bearbeitung eines sichtbaren Außenbereichs der Kunststoffprofile. Der zweite Fräser kann aber ebenso zur Ausbildung zumindest einer Nut oder eines Nutbereichs im stirnseitigen Endbereich der zu verschweißenden Kunststoffprofile verwendet werden, ohne dass ein Werkzeug gewechselt werden muss. Weiter ist es möglich, dass zuerst eine Planbearbeitung durch die ersten Fräser erfolgt und danach, gegebenenfalls nach einer Neupositionierung der Halterung relativ zu den Kunststoffprofilen, der zumindest eine zweite Fräser die Kunststoffprofile bearbeitet. Alternativ können die ersten Fräser und der zumindest eine zweite Fräser die Kunststoffprofile zeitgleich bearbeiten.

Durch die Anordnung der einander gegenüberliegenden ersten Fräser und des zumindest einen zweiten Fräsers auf einer gemeinsamen Halterung kann die Beweglichkeit der Halterung für beide Fräser genutzt werden. Der konstruktive Aufwand der Fräseranordnung ist dadurch deutlich reduziert.

Der Winkel zwischen der ersten Rotationsachse der ersten Fräser und der zweiten Rotationsachse des zweiten Fräsers kann auch als Rotationsachsenwinkel bezeichnet werden und in jeder räumlichen Orientierung ausgerichtet sein, wobei der Winkel vorzugsweise ein rechter Winkel ist. Dadurch können die ersten Fräser und der zumindest eine zweite Fräser in vorteilhafter Weise in eigenen Ebenen angeordnet sein, um eine Bearbeitung durchzuführen.

Konstruktiv ist es weiter günstig, wenn der Winkel zwischen der ersten Rotationsachse der ersten Fräser und der zweiten Rotationsachse des zweiten Fräsers vorzugsweise fest bzw. unveränderlich ausgebildet ist. Je nach Anwendungsfall ist es jedoch denkbar, dass der Winkel zwischen den Rotationsachsen veränderlich oder verstellbar ausgebildet ist. Dies eröffnet die Ausführung von weiteren Anwendungen und Fräsarbeiten.

Die erfindungsgemäße Fräseranordnung umfasst bevorzugt zwei erste Fräser, die auf einer gemeinsamen Rotationsachse liegen und einander gegenüberliegend auf beiden Seiten der Halterung angeordnet sind. Auf diese weise können zwei Gehrungsflächen der zu verschweißenden Kunststoffprofile gleichzeitig bearbeitet werden.

Eine Weiterbildung der Fräseranordnung sieht vor, dass die ersten Fräser Planfräser sind, die auf einer gemeinsamen Rotationsachse einander gegenüberliegen angeordnet sind. Planfräser werden bevorzugt für die Feinbearbeitung der Gehrungsflächen der zu verschweißenden Kunststoffprofile eingesetzt.

Die ersten Fräser verfügen über einen ersten Antrieb, der beide Fräser gleichzeitig und synchron antreibt. Der erste Antrieb kann ein Rotationsantrieb sein. Er ist vorzugsweise als elektrischer, elektromagnetischer, hydraulischer oder pneumatischer Antrieb ausgebildet. Er ist vorzugsweise mit einem Automatisierungsmittel signalverbunden und wird von diesem gesteuert.

Eine wichtige Ausbildung der Erfindung sieht vor, dass die zwei ersten Fräser in Richtung der ersten Rotationsachse einen Breitenabstand aufweisen, und dass die Halterung in Richtung der ersten Rotationsachse eine maximale Breite aufweist, wobei der Breitenabstand der ersten Fräser größer ist als die maximale Breite der Halterung. Die maximale Breite der Halterung erstreckt sich hierbei vorzugsweise senkrecht zu Ihrer Längsachse. Dadurch ist es möglich, mit der Halterung zwischen zwei in der Maschine eingespannten Kunststoffprofilen zu arbeiten und deren Gehrungsflächen präzise und gleichzeitig zu bearbeiten.

Die Halterung kann grundsätzlich quaderförmig und/oder als Haltearm ausgebildet sein. Die Längsachse der Halterung kann sich bevorzugt entlang einer Gehrungsfläche eines Kunststoffprofils erstrecken und insbesondere parallel dazu verlaufen. Die Halterung kann ferner den ersten Antrieb für die ersten Fräser tragen.

Gemäß einer Weiterbildung der erfindungsgemäßen Fräseranordnung können die ersten Fräser über eine Fräserhalterung an der Halterung angeordnet sein. Letztere kann die Fräserhalterung umfassen. Die Fräserhalterung kann plattenartig ausgebildet sein und/oder den entsprechenden Fräser zumindest bereichsweise umfangsseitig umgebend ausgebildet sein und/oder mit der Halterung über Befestigungsmittel, beispielsweise Schrauben verbunden sein. Jede Fräserhalterung weist eine Erstreckung in eine Richtung senkrecht zur Längsachse der Halterung auf, auch als Breitenrichtung oder dritte Raumrichtung bezeichnet.

Je nach Anwendungsfall kann alternativ auch vorgesehen sein, nur einen ersten Fräser in der Halterung vorzusehen.

Eine weitere wichtige Ausführungsform der Erfindung sieht vor, dass der zweite Fräser ein scheibenförmiges Fräsblatt ist mit umfangsseitig ausgebildeten Schneiden. Diese Schneiden können ausschließlich umfangsseitig angeordnet sein. Gleiches gilt für einen oder mehrere zusätzliche zweite Fräser.

Die Verwendung eines scheibenförmigen Fräsblatts ist besonders vorteilhaft gegenüber der Verwendung von Fingerfräsern oder Abstechmessern, denn für eine zeitgleiche Bearbeitung der Kunststoffprofile auf beiden Seiten der Halterung müssen jeweils mindestens zwei Fingerfräser oder zwei Abstechmesser vorgesehen sein. Die Erfindung kommt demgegenüber mit nur einem scheibenförmigen Fräsblatt aus, das - angeordnet in einem Winkel zu den ersten Fräsern auf beiden Seiten der Halterung die Kunststoffprofile bearbeiten kann.

Die Schneiden des zweiten Fräsers müssen sich nicht über den gesamten Umfang erstrecken. Es ist denkbar, dass die Schneiden abschnittsweise ausgebildet sind. In diesen Abschnitten können die Schneiden in gleichmäßigen Abständen zueinander angeordnet sein.

Gemäß einer Weiterbildung der erfindungsgemäßen Fräseranordnung können die Schneiden des zumindest einen zweiten Fräsers Schneidkanten aufweisen, die parallel, schräg oder schraubenartig zu der zweiten Rotationsachse ausgerichtet sind. Dadurch kann z.B. eine Nut mit einem Nutgrund und zwei gegenüberliegenden Nutwänden oder eine Stufe mit lediglich zwei Flächen, die einen Winkel miteinander einschließen, in die Kunststoffprofile eingearbeitet werden.

Eine wichtige Ausgestaltung der erfindungsgemäßen Fräseranordnung sieht vor, dass der zweite Fräser umfangsseitig in wenigstens zwei Bereichen seitlich abgeflacht ist, wobei diese wenigstens zwei Bereiche des zweiten Fräsers beispielsweise kreissegmentförmig oder kreissektorförmig ausgebildet sind.

Weiter ist vorgesehen, dass die Schneiden des zweiten Fräsers auf einem Schneidenkreis liegen, der einen Durchmesser aufweist, wobei die wenigstens zwei Bereiche des Fräsers derart ausgebildet und angeordnet sind, dass der Fräser in diesen zwei Bereichen eine maximale Breite aufweist.

Der zweite Fräser ist damit relativ zu seinem Gesamtdurchmesser seitlich schmaler ausgebildet, wobei der Schneidenkreis des zweiten Fräsers bei der kreissegmentförmigen Abflachung von einer Kreissehne geschnitten wird, während der Schneidenkreis bei der kreissektorförmigen Abflachung von zwei Kreisradien oder zwei Linien geschnitten wird, von welchen zumindest eine nicht die zweite Rotationsachse schneidet.

Man erkennt, dass der scheibenförmige zweite Fräser nicht kreisrund ausgebildet ist, sondern an den Seiten abgeflacht oder ausgespart ist, wobei der zweite Fräser in den seitlichen Bereichen, welche die Abflachungen bilden, beispielsweise zwei parallele Begrenzungsebenen bilden, wobei der Abstand dieser beiden Begrenzungsebenen der maximalen Breite des zweiten Fräsers in den seitlichen Bereichen der Abflachung bilden. Dennoch können sich die Schneiden des zweiten Fräsers bei Rotation um die zweite Rotationsachse entlang des gesamten Schneidenkreises bewegen und dabei zu beiden Seiten der Halterung die zu verschweißenden Kunststoffprofile bearbeiten.

In den wenigstens zwei Bereichen des zweiten Fräsers, in denen dieser seitlich abgeflacht ist, findet hingegen keine Bearbeitung der Kunststoffprofile statt, weil der zweite Fräser in diesen zwei Bereichen eine maximale Breite aufweist, die kleiner ist als der Durchmesser des Schneidenkreises des zweiten Fräsers, wobei hier bevorzugt auch keine Schneiden ausgebildet sind.

Wichtig ist, dass die maximale Breite des zweiten Fräsers kleiner ist als der Durchmesser des Schneidenkreises, wobei die maximale Breite des zweiten Fräsers in den seitlichen Bereichen der Abflachung keiner oder gleich dem Breitenabstand der ersten Fräser ist. Alternativ kann die maximale Breite des zweiten Fräsers auch kleiner oder gleich der maximalen Breite der Halterung sein.

Durch diese Ausgestaltung ist es möglich, den zweiten Fräser derart in der Halterung zu positionieren, dass die ersten Fräser ungehindert die zu verschweißenden Kunststoffprofile bearbeiten, denn die Schneiden des zweiten Fräsers gelangen in einer solchen Position nicht mit den Kunststoffprofilen in Eingriff.

Rotiert hingegen der zweite Fräser um seine zweite Rotationsachse, gelangen die auf dem Schneidenkreis ausgebildeten Schneiden mit den Kunststoffprofilen in Eingriff, wobei hierfür erfindungsgemäß vorgesehen ist, dass der Durchmesser des Schneidenkreises des zweiten Fräsers zumindest größer ist als die maximale Breite der Halterung. Vorzugsweise ist der Durchmesser des Schneidenkreises des zweiten Fräsers sogar größer als der Breitenabstand der ersten Fräser, so dass mit nur einem zusätzlichen Fräser in der Halterung der Fräsanordnung zahlreiche Bearbeitungsoptionen eröffnet werden.

Hierfür sieht die Erfindung weiter vor, dass für den zweiten Fräser ein separater (zweiter) Antrieb vorgesehen ist, welcher derart ausgebildet und ansteuerbar ist, dass der zweite Fräser wahlweise in eine Arbeitsstellung oder in eine Ruhezustandsstellung bringbar ist, wobei der zweite Fräser in der Arbeitsstellung um die zweite Rotationsachse rotiert und wobei der zweite Fräser in der Ruhezustandsstellung stillsteht und eine definierte Ausrichtung einnimmt.

Der separate oder zweite Antrieb kann ein Rotationsantrieb sein, um den zweiten Fräser um die zweite Rotationsachse zu drehen. Der zweite Antrieb kann dabei zum Beispiel als Elektroantrieb, Servomotor, elektromagnetisch oder hydraulisch bzw. pneumatisch (zum Beispiel mit entsprechenden Arbeitszylindern) realisiert sein. Der zweite Antrieb kann mit dem Automatisierungsmittel signalverbunden sein. Der zweite Antrieb kann von dem Automatisierungsmittel gesteuert werden.

Die definierte Ausrichtung des zweiten Fräsers in der Ruhezustandsstellung ist derart ausgebildet oder definiert, dass die Schneiden auf dem Schneidenkreis des zweiten Fräsers nicht über den Breitenabstand der ersten Fräser hinausragen.

Damit ist es möglich, den zweiten Fräser in eine Art Parkposition zu bringen, in der die Schneiden des zweiten Fräsers nicht in Kontakt mit den Kunststoffprofilen gelangen. Die erfindungsgemäß Fräseranordnung kann vielmehr allein mit den ersten Fräsern arbeiten. Rotiert hingegen der zweite Fräser um seine zweite Rotationsachse gelangen dessen Schneiden in Eingriff mit den Kunststoffprofilen, so dass diese auf beiden Seiten der Halterung zusätzlich und gleichzeitig bearbeitet werden.

Die Fräswirkung des zweiten Fräsers wird durch die seitlichen Abflachungen nicht reduziert. Während der Rotation um seine Rotationsachse fräst der zweite Fräser entlang seines gesamten Schneidenkreises. Jedoch benötigt der erfindungsgemäße Fräser in zumindest einer definierten Ausrichtung weniger Bauraum und er steht, wenn er nicht rotiert, hinter den ersten Fräsern und/oder hinter der Halterung zurück, so dass sich diese ungehindert zwischen den Kunststoffprofilen bewegen kann.

Gemäß einer denkbaren Weiterbildung der erfindungsgemäßen Fräseranordnung kann der zweite Fräser zumindest zwei Seitenflanken, vorzugsweise mit geradem Verlauf, und/oder zumindest zwei Seitenflanken mit jeweils zumindest einer Aussparung aufweisen. Die gerade Seitenflanke lässt sich mittels Sekante oder Sehne definieren und kann durchgehend, jedoch auch unterbrochen sein. Die Aussparung kann eine konkave Ausnehmung bezüglich der entsprechenden Rotationsachse sein. Sie reduziert Gewicht und an dieser Stelle vorhandenes Material. Die Seitenflanke kann die Abflachung sein oder diese repräsentieren.

Gemäß einer denkbaren Weiterbildung der erfindungsgemäßen Fräseranordnung können die Seitenflanken des zumindest einen zweiten Fräsers zumindest bereichsweise und/oder paarweise parallel zueinander verlaufen. Dadurch kann eine lagerschonende Rotation durch Vermeidung einer Unwucht erzeugt werden.

Gemäß einer denkbaren Weiterbildung der erfindungsgemäßen Fräseranordnung können die Seitenflanken symmetrisch zur entsprechenden zweiten Rotationsachse des zweiten Fräsers angeordnet sein. Diese Symmetrie kann eine Rotationssymmetrie sein. Diese Symmetrie kann zusätzlich oder alternativ eine Spiegelsymmetrie bezüglich einer Ebene sein, in welcher die zweite Rotationsachse liegt. Diese Spiegelsymmetrieebene kann zentral durch die Seitenflanken verlaufen.

Gemäß einer denkbaren Weiterbildung der erfindungsgemäßen Fräseranordnung können die Seitenflanken bezogen auf die Rotationsachse des zweiten Fräsers einander gegenüberliegend ausgebildet sein, wobei dies nur für eine gerade Anzahl von Seitenflanken gilt.

Gemäß einer denkbaren Weiterbildung der erfindungsgemäßen Fräseranordnung können die Seitenflanken in den Umfangsbereichen ausgebildet sein. Vorzugsweise sind die Seitenflanken ausschließlich innerhalb der Umfangsbereiche ausgebildet. Jede Seitenflanke kann separat innerhalb eines Umfangsbereiches angeordnet sein.

Gemäß einer denkbaren Weiterbildung der erfindungsgemäßen Fräseranordnung können im Bereich der Seitenflanken des zumindest einen zweiten Fräsers keine Schneiden ausgebildet sein. Der Bereich kann also schneidenfrei sein. Denkbar ist auch, dass die Umfangsbereiche oder Winkelbereiche keine Schneiden umfassen, also schneidenfrei ausgebildet sind. Es stehen somit von der Seitenflanke keine Schneiden ab, welche den entsprechenden Umfangsbereich oder Winkelbereich radial durchragen oder dort einragen, um die Schneide auf dem zweiten Schneidenkreis zu platzieren. Der Umfangsbereich oder Winkelbereich kann somit bewusst schneidenfrei ausgebildet werden. Dies fördert eine schmale Bauart des zweiten Fräsers.

Grundsätzlich sind weitere Geometrien zur seitlichen Abflachung des zweiten Fräsers denkbar. So können diese beispielsweise gerade oder aber auch konvex oder konkav bezüglich der entsprechenden Rotationsachse verlaufen. Es sind auch Mischformen denkbar.

Gemäß einer Weiterbildung der erfindungsgemäßen Fräseranordnung ist vorgesehen, dass wenigstens ein Sensor vorgesehen ist, der wenigstens eine Drehstellung und/oder die definierte Ausrichtung des zweiten Fräsers in der Ruhezustandsstellung erfasst. Der Sensor kann zur direkten oder indirekten Detektion der Stellung des zweiten Fräsers ausgebildet sein. Vorzugsweise handelt es sich bei dem Sensor um einen Induktionssensor. Mit einem solchen Sensors kann die Stellung und/oder die räumliche Ausrichtung des zweiten Fräsers direkt oder indirekt zu jeder Zeit ermittelbar sein.

Der Sensor kann weiter mit dem Automatisierungsmittel signalverbunden sein. Ein von dem Sensor erfasstes oder erzeugtes Signal wird in diesem Fall direkt oder indirekt dem Automatisierungsmittel zugeführt.

Der Sensor ist bevorzugt in räumlicher Nähe zu dem zumindest einen zweiten Fräser angeordnet. Der Sensor kann oberhalb oder unterhalb, des zweiten Fräsers angeordnet sein, bezogen auf die Bearbeitungsebene oder den Schneidenkreis, in welcher/welchem der zweite Fräser rotieren kann.

Der Sensor ist bevorzugt an einem Halter befestigt, der beispielsweise mittels Schrauben an einer Halteplatte für den zweiten Fräser fixiert ist.

Gemäß einer weiteren Ausführungsform der erfindungsgemäßen Fräseranordnung ist vorgesehen, dass der zweite Fräser an oder in einer drehbar gelagerten Fräseraufnahme angeordnet ist. Der zweite Fräser ist formschlüssig, insbesondere drehfest mit der Fräseraufnahme verbunden. Ferner ist es von Vorteil, wenn der zweite Fräser lösbar an oder in der Fräseraufnahme befestigt ist, so dass der zweite Fräser im Bedarfsfall ausgewechselt werden kann.

Konstruktiv ist es günstig, wenn die Fräseraufnahme in einer Lagerung drehbar gelagert ist, wobei die Lagerung an der Halteplatte für den zweiten Fräser befestigt ist.

Die Fräseraufnahme hat einen Umfangsrand, der in Draufsicht profiliert ausgebildet ist und eine Detektionskulisse bildet. Diese hat an zumindest einer Stelle entlang des Umfangs ein Detektionsmittel, das mit dem Sensor zusammenwirkt. Das Detektionsmittel kann beispielsweise als Vorsprung oder Nase und/oder als Ausnehmung ausgebildet sein. Die Detektionskulisse der Fräseraufnahme ist bevorzugt derart ausgebildet oder angeordnet, dass der Vorsprung oder die Nase etwa mittig zwischen den seitlichen Abflachungen des zweiten Fräsers und damit etwa mittig zwischen den zwei Bereichen des zweiten Fräsers liegen, welche die Abflachungen bilden.

Mit der Detektionskulisse und dem Sensor kann damit auf einfache Weise, insbesondere berührungslos, die Stellung oder räumliche Ausrichtung des zweiten Fräsers bezüglich der zweiten Rotationsachse ermittelt werden. Insbesondere kann damit überwacht und/oder kontrolliert werden, ob sich der zweite Fräser in seiner Arbeitsstellung oder seiner Ruhezustandsstellung befindet. Hierzu ist es zweckmäßig, wenn der Sensor in Richtung der zweiten Rotationsachse auf gleicher Höhe mit der Detektionskulisse angeordnet ist.

Die Ausnehmungen in der Detektionskulisse, die vorzugsweise symmetrisch und gegenüberliegend ausgebildet sind, werden verwendet, um eine größere Sensorwertspreizung zwischen Maxialmwerten bei der Messung durch den Sensor zu erzeugen. Während die Vorsprünge oder Nasen für einen maximalen Signalwert sorgen, führen die Ausnehmungen zu einem davon deutlich verschiedenen anderen maximalen Signalwert. Eine Messungenauigkeit lässt sich dadurch reduzieren, das Wissen um die genaue Ausrichtung des zweiten Fräsers lässt sich erhöhen.

Gemäß einer denkbaren Weiterbildung der erfindungsgemäßen Fräseranordnung kann der separate bzw. zweite Antrieb für den zweiten Fräser an oder in einer separaten Halterung ausgebildet oder damit verbunden sein. Die separate Halterung kann eine Halteplatte umfassen, die an einem definierten Abschnitt oder einem stirnseitigen Ende der Halterung der Fräseranordnung befestigt ist.

Gemäß einer denkbaren Weiterbildung der erfindungsgemäßen Fräseranordnung kann der zweite Antrieb unabhängig von dem ersten Antrieb ausgebildet sein. Unabhängige Antriebe ermöglichen unabhängige Bearbeitungen durch die entsprechenden Fräser, wobei die Antriebe über das Automatisierungsmittel unabhängig gesteuert werden können.

Gemäß einer denkbaren Weiterbildung der erfindungsgemäßen Fräseranordnung umfasst diese einen Speicher zur Speicherung von Daten. In dem Speicher können Signale des Sensors abgelegt werden. Der Speicher kann mit dem Automatisierungsmittel signalverbunden sein.

Gemäß einer denkbaren Weiterbildung der erfindungsgemäßen Fräseranordnung können in der Ruhezustandsstellung die Seitenflanken des zweiten Fräsers parallel zur Längsachse der Halterung liegen oder verlaufen.

Gemäß einer denkbaren Weiterbildung der erfindungsgemäßen Fräseranordnung kann ein Arretierungsmittel vorgesehen sein, um den zweiten Fräser in seiner Ruhezustandsstellung zu arretieren. Dieses Arretierungsmittel kann beispielsweise ein Stift sein, der im Reibschluss mit dem zweiten Fräser in Kontakt tritt. Das Arretierungsmittel kann aber auch in eine Gegengeometrie am zweiten Fräser eingreifen und eine Rotation des zweiten Fräsers verhindern. Vorteilhaft ist eine Gegengeometrie am zweiten Fräser selbst ausgebildet. Die Gegengeometrie kann eine Bohrung sein. Die Bohrung als Gegengeometrie kann an ihrem dem Arretierungsmittel zugewandten Rand eine umlaufende Einlaufschräge oder Fase aufweisen. Dadurch wird ein Verklemmen sicher verhindert, da das Arretierungsmittel in die Gegengeometrie einlaufen oder einrutschen kann.

Gemäß einer denkbaren Weiterbildung der erfindungsgemäßen Fräseranordnung kann das Arretierungsmittel derart ausgebildet sein, um den zumindest einen zweiten Fräser aus der Arbeitsstellung in die definierte Ausrichtung der Ruhezustandsstellung zu bringen. Noch während der Rotation des zweiten Fräsers kann das Arretierungsmittel derart verstellt werden, dass der relativ dazu drehende zweite Fräser auf das Arretierungsmittel aufläuft oder daran anschlägt und sich selbst arretiert. Eine weitere Rotation wird dadurch gestoppt. Sobald das Arretierungsmittel zu einer solche Arretierung verstellt wird, kann auch der zweite Antrieb ein Antreiben des zweiten Fräsers beenden, so dass er lediglich noch schwungbedingt rotiert. Ein Antreiben durch den Antrieb in Arretierungsstellung ist somit ausgeschlossen.

Das Automatisierungsmittel dient der Steuerung oder Regelung. Automatisierung soll als Oberbegriff für Steuerung und Regelung verstanden werden, da es sich bei Steuerungen und Regelungen um zwei Arten der Automatisierung handelt, wobei jede Regelung auch eine Steuerung ist. Das Automatisierungsmittel kann kabelgebunden oder kabellos signaltechnisch verbunden sein mit dem ersten Antrieb, dem zweiten Antrieb, dem Sensor, dem Arretierungsmittel, dem Speicher und/oder einem Antrieb für den Halter. Denkbar ist, dass das Automatisierungsmittel die Aufrechterhaltung der Ruhezustandsstellung des zweiten Fräsers überwacht, beispielsweise vermittels Auswertung der Sensorsignale. Der Ruhezustandsstellung können definierte Signalwerte zugeordnet sein, so dass mittels einer Abweichung davon oder mittels einem Überschreiten/Unterschreiten eines zulässigen Grenzwerts des Signalwertes das Verlassen der Ruhezustandsstellung erkannt werden kann. In diesem Fall kann das Automatisierungsmittel umgehend einen Notstopp aller oder ausgewählter Antriebe einleiten (Antrieb des Halters, Antrieb des/der ersten Fräser(s) und/oder Antrieb des/der zweitens Fräser(s)).

Eine weitere wichtige Ausgestaltung der Erfindung sieht vor, dass die Fräseranordnung ein Fräsmodul aufweist oder bildet, welches den zweiten Fräser umfasst. Das Fräsmodul umfasst ferner die Fräseraufnahme, deren Lagerung sowie den zweiten Antrieb. Das Fräsmodul ist ferner bevorzugt als vormontierte Baueinheit auf der Halteplatte aufgebacht, so dass das Fräsmodul jederzeit und ohne großen Zeitaufwand ausgewechselt werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schrägansicht einer erfindungsgemäßen Fräseranordnung mit zwei ersten Fräsern und einem zweiten Fräser;
- Fig. 2: eine schematische Ansicht von Rotationsachsen gemäß Fig. 1;
- Fig. 3: eine Detail-Ansicht eines Fräsmoduls mit dem zweiten Fräser;
- Fig. 4: eine Draufsicht auf den zweiten Fräser und eine Fräseraufnahme;
- Fig. 5: eine schematische Darstellung des zweiten Fräsers in einer Ruhezustandsstellung; und
- Fig. 6: eine schematische Darstellung des zweiten Fräsers in einer Arbeitsstellung.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

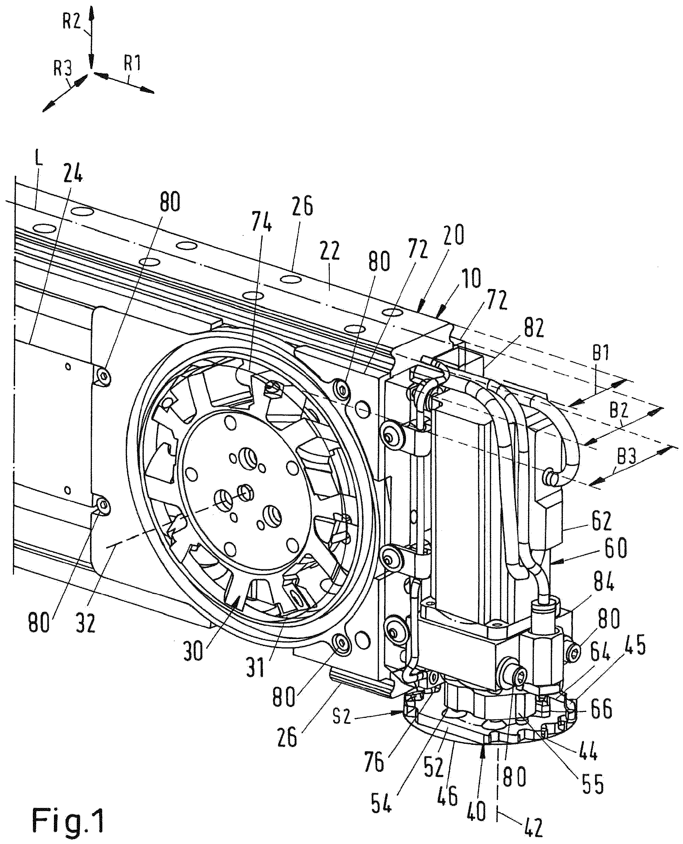

In Fig. 1 ist eine Fräseranordnung 10 gezeigt, die für die Bearbeitung des Endbereiches zumindest eines Kunststoffprofiles ausgebildet ist. Die Fräseranordnung 10 umfasst eine Halterung 20 mit einer Längsachse L, die als Haltearm 22 ausgestaltet sein kann. Im Wesentlichen ist die Halterung 20 quaderförmig. Ein (hier nicht dargestellter) Antrieb kann wahlweise bewirken, dass die Halterung 20 entlang einer ersten Raumrichtung R1 (Längsrichtung) und entlang einer zweiten Raumrichtung R2 (Hochrichtung) beweg- und positionierbar gelagert ist. Eine dritte Raumrichtung R3 (Querrichtung) vervollständigt das kartesische Koordinatensystem. Die Halterung 20 ist in einer Ebene, die parallel oder identisch ist mit einer Verschweißungsfläche (das ist die Ebene, auf welche hin die zu verschweißenden Profilstäbe verschweißt werden) beweglich ist. Dies ist mit den orthogonal zueinanderstehenden Doppelpfeilen der Raumrichtungen R1 und R2 gezeigt.

Die Fräseranordnung 10 umfasst zwei erste Fräser 30, die an einander abgewandten seitlichen Seiten der Halterung 20 angeordnet sind. Jeder erste Fräser 30 weist eine erste Rotationsachse 32 auf, um welche er rotierbar ist, wobei die beiden ersten Fräser 30 derart in der Halterung 20 drehbar angeordnet und mit dieser beweg- und positionierbar sind, dass die beiden ersten Fräser 30 koaxial zueinander sind, also auf einer gemeinsamen Rotationsachse 32 liegen.

Die Fräseranordnung 10 umfasst zudem einen zweiten Fräser 40. Der zweite Fräser 40 weist eine zweite Rotationsachse 42 auf, um welche er rotierbar ist. Der zweite Fräser 40 ist mit der Halterung 20 beweg- und positionierbar.

Die Halterung 20 umfasst im Wesentlichen ein Gestell 24. In dem Gestell 24 sind die ersten Fräser 30 und deren erster Antrieb untergebracht.

Seitlich an der Haltung 20 sind Segmente 72 vorgesehen, welche über Schrauben 80 mit der Halterung 20 verschraubt sind. Die Segmente 72 sind jeweils plattenartig ausgebildet und dienen der Befestigung des zweiten Fräsers 40, der vorzugsweise Bestandteil eines Fräsmoduls 70 ist. Die in Fig. 1 gezeigte Halterung 20 dient zum gleichzeitigen Bearbeiten von Profilstäben, weswegen die Halterung 20 beidseits bestückt ist, also zwei erste Fräser 30 umfasst sowie mit einem zweiten Fräser 40 für weitere Bearbeitungsschritte ausgestattet ist. In der Bildebene der Fig. 1 sind oben und unten an der Halterung 20 oder dem Gestell 24 je eine Führungsschiene 26 angeordnet, die mit hier nicht weiter dargestellten Führungsschienen führend zusammenwirken.

Die beiden ersten Fräser 30 sind jeweils als Planfräser ausgestaltet. Jeder erste Fräser 30 umfasst eine Mehrzahl von Schneiden 31. Die Schneiden 31 jedes ersten Fräsers 30 liegen auf einem ersten Schneidenkreis 74. Die Schneiden 31 können sich bei Rotation des entsprechenden ersten Fräsers 30 entlang des gesamten ersten Schneidenkreises 74 bewegen. Der erste Schneidenkreis 74 kann daher ein geschlossener Schneidenkreis 74 sein.

Die zwei ersten Fräser 30 weisen ferner in Richtung der ersten Rotationsachse 32 einen Breitenabstand B3 auf. Die Halterung 20) hat in Richtung der ersten Rotationsachse 32 eine maximale Breite B2, wobei der Breitenabstand B3 der ersten Fräser 30 größer ist als die maximale Breite B2 der Halterung 20.

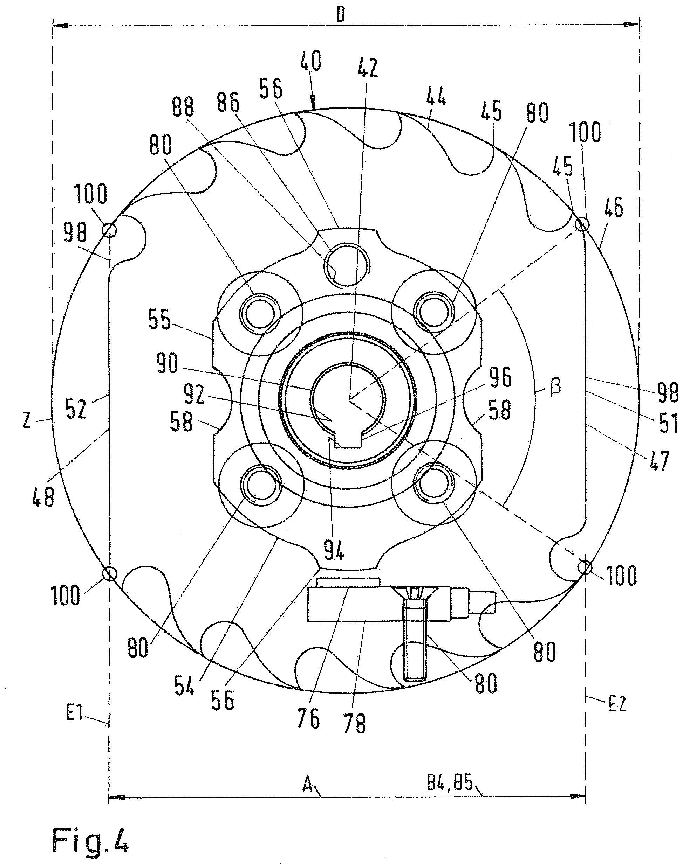

Der zweite Fräser 40 ist als ein scheibenförmiges Fräsblatt mit umfangsseitig ausgebildeten Schneiden 44 ausgebildet, in Einzeldarstellung in den Fig. 4 bis 6 gezeigt. Die Schneiden 44 sind ausschließlich umfangsseitig angeordnet, jedoch nicht über den gesamten Umfang. Die Schneiden 44 des zweiten Fräsers 40 liegen auf einem Schneidenkreis 46 und weisen jeweils eine Schneidkante 45 auf, welche jeweils parallel zur zweiten Rotationsachse 32 verlaufen. Die Schneiden 44 können sich bei Rotation des zweiten Fräsers 40 entlang des gesamten Schneidenkreises 46 bewegen. Der Schneidenkreis 46 kann daher ein geschlossener Schneidenkreis 46 sein. Der Schneidenkreis 46 weist einen Durchmesser D auf.

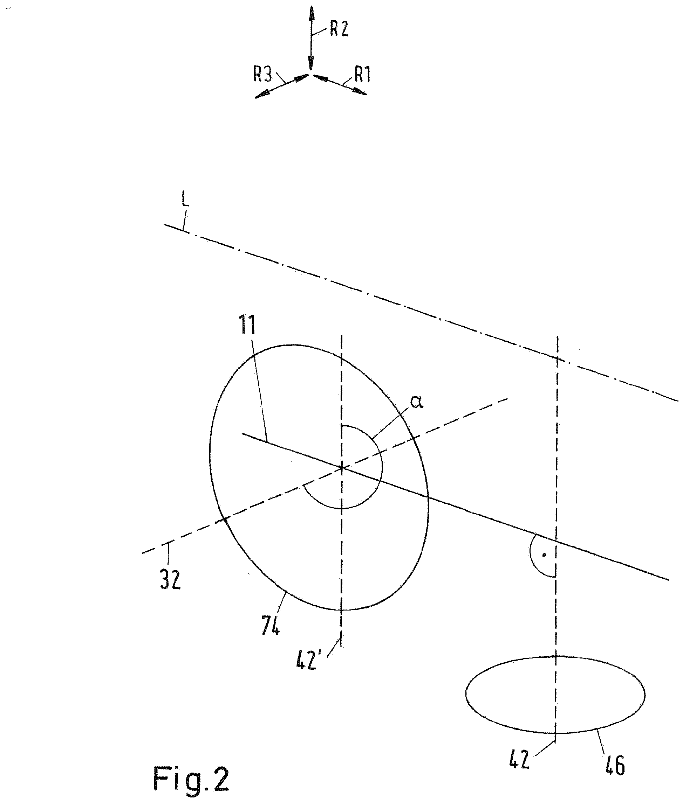

Mit Blick auf Fig. 2, die auf Fig. 1 beruht, jedoch einige Elemente ausblendet, soll nun die räumliche Beziehung zwischen den Rotationsachsen 32 und 42 erläutert werden. Die zweite Rotationsachse 42 des zweiten Fräsers 40 ist in einem Winkel α bzw. Rotationsachsenwinkel zur ersten Rotationsachse 32 des ersten Fräsers 30 ausgerichtet. Zur Längsachse L parallelverschoben ist eine Minimaltransversale M. Sie ist diejenige eindeutig bestimmte Gerade, welche im rechten Winkel zu den beiden Rotationsachsen 32 und 42 steht. Da die Rotationsachse 32 des anderen ersten Fräsers 30 identisch auf der ersten Rotationsachse 32 des gezeigten ersten Fräsers 30 liegt, sind sie koaxial zueinander ausgerichtet. Die Rotationsachse 32 kann also auch als gemeinsame erste Rotationsachse 32 der beiden ersten Fräser 30 angesehen werden. Erkennbar ist, dass die erste Rotationsachse 32 und die zweite Rotationsachse 42 windschief zueinander ausgerichtet sind. Um den Winkel α bzw. Rotationsachsenwinkel von den zwei windschiefen Rotationsachsen 32 und 42 zu bestimmen, kann beispielsweise die zweite Rotationsachse 42 gedanklich derart parallelverschoben werden, dass sie die erste Rotationsachse 32 schneidet. Dies ist gezeigt vermittels der parallelverschobenen zweiten Rotationsachse 42`. Es bildet sich zwischen den Achsen 32 und 42' ein Schnittpunkt und der Winkel α aus. Dieser Winkel α ist größer Null und im gezeigten Ausführungsbeispiel rechtwinklig.

Die Antriebe für die Fräser 30, 40 sind jeweils Rotationsantriebe, die zur Rotation des jeweiligen Fräser 30, 40 führen. Die Rotationsachsen 32, 42 sind relativ zueinander unbeweglich. Die Fräser 30, 40 weisen einen unveränderlichen Abstand zur Halterung 20 auf. Der zweite Antrieb 60 wird über einen Anschluss 62 mit Strom versorgt.

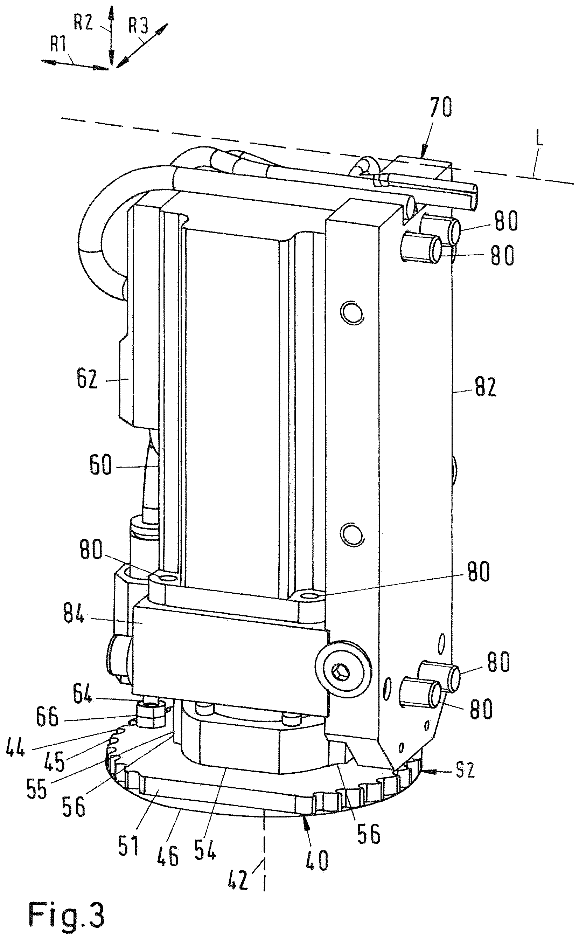

Fig. 3 zeigt das Fräsmodul 70 mit dem zweiten Fräser 40, das bevorzugt als vormontierte Baueinheit ausgebildet ist und als solche mittels Schrauben 80 an der Halterung 20 montiert und demontiert werden kann.

Das Fräsmodul 70, das auch in Fig. 1 gezeigt ist, baut auf einer Halteplatte 82 auf, die mit den Schrauben 80 an der Halterung 20 der Fräseranordnung 10 befestigbar ist. Das Fräsmodul 70 umfasst im Wesentlichen die Halteplatte 82, den zweiten Fräser 40, eine Fräseraufnahme 54 mit einem Detektionselement 55, eine Lagerung 84 für die Fräseraufnahme 54, den zweiten Antrieb 60 für den zweiten Fräser 40, einen Sensor 76 sowie ein Arretierungsmittel 64 für den zweiten Fräser 40.

Der zweite Antrieb 60 ist bevorzugt ein Servomotor. Er sitzt auf einer Lagerung 84 und ist mit dieser über weitere Schrauben 80 fest verbunden. Die Lagerung 84 wiederum ist ebenfalls über Schrauben 80 mit der Halteplatte 82 verbunden, wobei obere Schrauben 80 sowie untere Schrauben 80, welche die Lagerung 84 durchragen und mit der Halteplatte 82 verbinden, jeweils in Längsrichtung L durch die Halteplatte 82 hindurchgreifen und das Fräsmodul 70 an der Halterung 20 fixieren. Letztere ist hierfür mit (nicht weiter gezeigten) Gewindebohrungen versehen.

In der Lagerung 84 ist von unten die Fräseraufnahme 54 axialfest-drehbar eingesetzt, die hierfür beispielsweise mit einem (nicht dargestellten) Halsansatz versehen ist. Die Fräseraufnahme 54 trägt den zweiten Fräser, der über vier weitere Schrauben 80 mit der Fräseraufnahme 54 fest verbunden ist. Ein zusätzlicher Sicherungsstift 86, der an der Fräseraufnahme 54 ausgebildet ist, greift in eine Bohrung 88 im zweiten Fräser 40 ein. Für die Aufnahme der Schrauben 80 ist der zweite Fräser mit weiteren (nicht bezeichneten) Bohrungen versehen, die vorzugsweise auf einem Lochkreis liegen.

Wie in Fig. 4 weiter zu erkennen, führt von dem zweiten Antrieb 60 aus eine davon angetriebene Antriebswelle 90 durch die Lagerung 84 hindurch bis in eine zentrische Bohrung 92 in der Fräseraufnahme 54. In der Bohrung 92 ist entlang ihrer Längsachse eine Nut 94 ausgebildet, in welche eine Feder 96 der Antriebswelle 90 eingreift. Mit der Antriebswelle 90 sind somit die Fräseraufnahme 54 und der zweite Fräser 40 formschlüssig und damit drehfest verbunden. Letzterer kann für die Aufnahme des freien Endes der Antriebswelle 90 mit einer zentrischen Bohrung versehen sein.

Die Lagerung 84 trägt ferner das Arretierungsmittel 64, welches als Stift ausgebildet ist, welcher entlang einer Parallelen zur zweiten Rotationsachse 42 wahlweise verstellbar ist. In einer in den Fig. 1, 3 und 5 gezeigten Ruhezustandsstellung S2 des zweiten Fräsers 40 steht das Arretierungsmittel 64 mit dem zweiten Fräser 40 in Kontakt, namentlich im Reibschluss, so dass eine Rotation des zweiten Fräsers 40 um die zweite Rotationsachse 42 verhindert wird.

Die Führungsschienen 26 der Halterung 20 weisen in der dritten Raumrichtung R3 eine Breite B1 auf, bezeichnet als erste Breite B1. Die Halterung 20 selbst hat in der dritten Raumrichtung R3 insgesamt eine maximale Breite B2, die etwas größer ist als die Breite B1. Die beiden ersten Fräser 30 definieren, ebenfalls in der dritten Raumrichtung R3, mit ihren beiden Schneidenkreisen 74 einen Breitenabstand B3, der größer sit die Breite B2 der Halterung. Im vorliegenden Beispiel gilt damit B1 < B2 < B3.

Die geometrische Ausgestaltung des zweiten Fräsers 40, der vorzugsweise im Wesentlichen scheibenförmig ausgebildet ist, und der Fräseraufnahme 54 mit dem Detektionselement 55 sollen nun insbesondere mit Blick auf Fig. 4 beschrieben werden.

Fig. 4 zeigt eine Draufsicht auf die Fräseraufnahme 43 und den zweiten Fräser 40 entlang der zweiten Rotationsachse 42. Erkennbar ist der Schneidenkreis 46 des zweiten Fräsers, der einen Durchmesser D aufweist. Der zweite Fräser 40 ist entlang des zweiten Schneidenkreises 46 in zwei Bereichen 47, 48 seitlich abgeflacht. Diese Umfangsbereiche 47, 48 sind jeweils kreissegmentförmig ausgebildet. Dadurch entstehen seitliche Abflachungen. Der zweite Fräser 40 ist somit nicht durchgehend kreisrund ausgebildet.

Der zweite Fräser 40 hat damit zwei Seitenflanken 51, 52 mit geradem Verlauf. Jede Seitenflanke 51, 52 erstreckt sich entlang einer Sehne 98, die jeweils zwei Schnittpunkte 100 mit dem zweiten Schneidenkreis 46 aufweist. Zwischen den Schnittpunkten 100 weisen die Seitenflanken 51, 52 einen durchgehenden Verlauf auf. Die beiden Seitenflanken 51, 52 verlaufen zwischen den Schnittpunkten 100 durchgehend parallel zueinander. Die beiden Seitenflanken 51, 52 sind zudem spiegelsymmetrisch bezüglich einer Ebene, in welcher die zweite Rotationsachse 42 liegt, und liegen sich bezogen auf die zweite Rotationsachse 42 des zweiten Fräsers 40 einander gegenüber. Die beiden Ebenen 51, 52 und auch der zweite Fräser 40 sind des weiteren rotationssymmetrisch um die zweite Rotationsachse 42. Der zweite Fräser 40 weist damit zwei um 180° zueinander versetzte Ausrichtungen auf, die identisch sind. Erkennbar ist, dass die Seitenflanken 51, 52 vollständig in den Bereichen 47, 48 ausgebildet sind, wobei die Seitenflanke 51 im Umfangsbereich 47 und die Seitenflanke 52 im Umfangsbereich 48 ausgebildet ist. Erkennbar ist zudem, dass der zweite Fräser 40 vollständig zwischen zwei parallelen Begrenzungsebenen E1, E2 angeordnet ist. Die parallelen Begrenzungsebenen E1, E2 können sich parallel zur Längsachse L erstecken. Die beiden Sehnen 98 liegen in den Begrenzungsebenen E1, E2, was folglich auch für die Seitenflanken 51, 52 gilt.

Der zweite Fräser 40 umfasst entlang seiner Umfangsrichtung zwei Bereiche mit Schneiden 44 und zwei Bereiche ohne Schneiden, wobei sich diese Bereiche abwechseln. Diese Bereiche lassen sich einerseits über die Breite B4 sowie über den Durchmesser D des zweiten Fräsers 40 definieren oder mittels Winkelbereichen, wobei deren Zentrum auf der zweiten Rotationsachse 42 liegt. Zwischen den Winkelbereichen sind zwei Gruppen von Schneiden 44 angeordnet. Innerhalb jeder Gruppe sind die Schneiden 44 mit gleichen Abständen angeordnet.

Jede Gruppe umfasst sechs Schneiden 44. Die Bereiche 47, 48 sind jeweils schneidenfrei ausgebildet.

Die zwei Bereiche 47, 48 und damit die Seitenflanken 51, 52 des zweiten Fräsers 40 sind derart ausgebildet und voneinander beabstandet, dass der Fräser 40 in diesen zwei Bereichen 47, 48 eine maximale Breite B4 aufweist. Dies ist damit die kürzeste Erstreckung des zweiten Fräsers 40 senkrecht zur zweiten Rotationsachse 42. In Fig. 4 ist diese maximale Breite B4 gleich einer langen Breite B5, welche die längste Erstreckung des zweiten Fräsers 40 senkrecht zu der zweiten Rotationsachse 42 zwischen den Umfangsbereichen 47, 48 ist.

Die Fräseranordnung weist ferner einen Sensor 76 auf, der bevorzugt als Induktionssensor ausgestaltet sein kann. Dieser ist von einem Sensorhalter 78 getragen, welcher mittels einer weiteren Schraube 80 an der Halteplatte 82 verschraubt ist. Der Sensor 76 ist innerhalb eines gedachten Zylinderraums Z angeordnet, von welchem der zweite Schneidenkreis 46 einen Durchmesser D bildet und welcher sich entlang der zweiten Rotationsachse 42 erstreckt. Der Sensor ist auf einer gleichen Höhe mit der Detektionskulisse 57 bezüglich der zweiten Rotationsachse 42 angeordnet. Der Induktionssensor 76 erkennt die Detektionskulisse 57 des Detektionselements 55 der Fräseraufnahme 54.

Der Fräseranordnung ist ein (nicht dargestelltes) Automatisierungsmittel zugeordnet. Das Automatisierungsmittel kann kabelgebunden oder kabellos signaltechnisch verbunden sein mit dem ersten Antrieb, dem zweiten Antrieb 60, dem Sensor, dem Arretierungsmittel 64, dem Speicher und/oder einem Antrieb für den Halter 20.

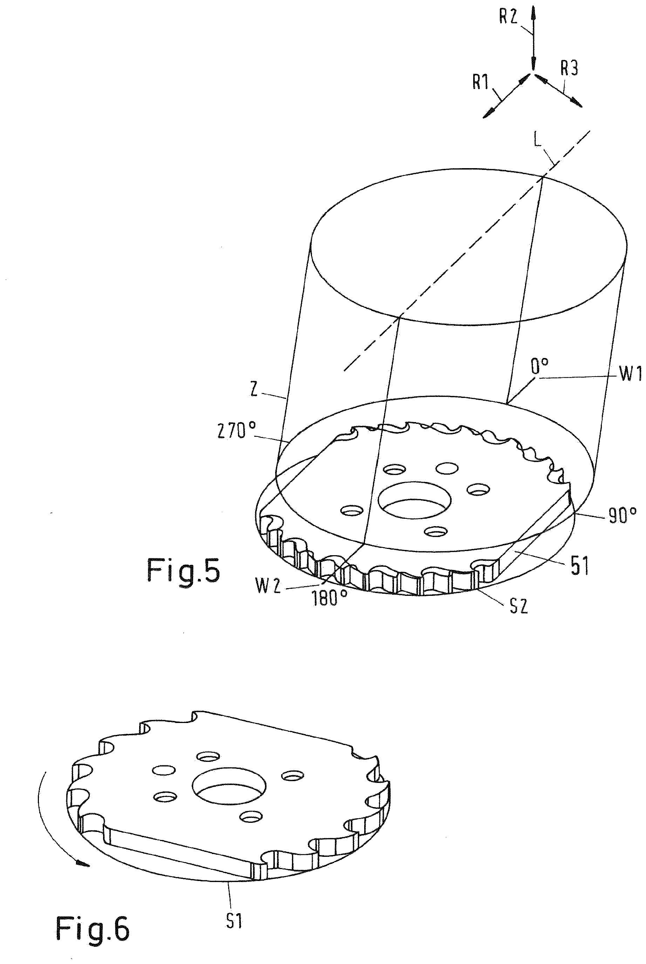

Anhand von Fig. 5 und 6 soll nun die Funktionalität beschrieben werden. Fig. 5 zeigt einen zweiten Fräser 40 mit insgesamt 12 Schneiden 44, während in der Fig. 6 ein zweiter Fräser 40 mit insgesamt 24 Schneiden 44 dargestellt ist. Die Funktionsweise der beiden Fräser 40 in den Fig. 5 und 6 ist identisch. Entscheidend ist die Ausbildung der seitlichen Flanken 51, 52, die sich in einem Abstand A, B4, B5 befinden, der kleiner ist als der Breitenabstand B3 der ersten Fräser 30.

In Fig. 5 befindet sich der zweite Fräser 40 in der Ruhezustandsstellung S2, während sich der zweite Fräser 40 in Fig. 6 in einer Arbeitsstellung S1 befindet. In der Ruhezustandsstellung S2 verlaufen die Seitenflanken 51, 52 des zweiten Fräsers 40 parallel zur Längsachse L der Halterung 20. Der zweite Antrieb 60 ist derart ausgebildet und ansteuerbar, dass der zweite Fräser 40 sich wahlweise in der Arbeitsstellung S1 befindet, in welcher er sich um die zweite Rotationsachse 42 dreht, oder in der Ruhezustandsstellung S2 befindet, in welcher er sich nicht um seine Rotationsachse 42 dreht und/oder stillsteht und eine definierte Ausrichtung einnimmt.

Der Ruhezustandsstellung S2 sind zwei definierte Ausrichtungen des zweiten Fräsers 40 oder Winkelwerte zugeordnet, nämlich eine 0°-Ausrichtung und eine 180°-Ausrichtung. Diese Ausrichtungen sind so gewählt, dass in der Ruhezustandsstellung S2 die Seitenflanken 51, 52 des zweiten Fräsers 40 parallel zur Längsachse L der Halterung 20 verlaufen. Die Winkelwerte können auch als Ruhezustandswinkel W1, W2 bezeichnet werden. Hat der zweite Fräser 40 eine dieser beiden Ausrichtung oder einen oder beide Ruhezustandswinkel W1, W2 eingenommen und dreht sich nicht weiter, ist er in Ruhezustandsstellung S2.

Die Erfindung ist nicht auf eine der vorbeschriebenen Ausführungsformen beschränkt, sondern in vielfältiger Weise abwandelbar.

Man erkennt, dass eine Fräseranordnung 10 für die Bearbeitung eines Kunststoffprofils eine Halterung 20 hat, die zumindest entlang einer Raumrichtung R1, R2 beweg- und positionierbar gelagert ist. Die Anordnung hat ferner zwei erste Fräser 30, die einander gegenüberliegend seitlich in der Halterung 20 angeordnet sind und um eine erste Rotationsachse 32 drehbar gelagert sind, sowie zumindest einen zweiten Fräser 40, der in oder an der Halterung 20 um eine zweite Rotationsachse 42 drehbar angeordnet und mit der Halterung 20 beweg- und positionierbar ist. Die zweite Rotationsachse 42 des zweiten Fräsers 40 ist in einem Winkel α zur ersten Rotationsachse 32 der ersten Fräser 30 ausgerichtet, wobei der Winkel α größer Null ist. Die zwei ersten Fräser 30 weisen in Richtung der ersten Rotationsachse 32 einen Breitenabstand B3 auf, während die Halterung 20 in Richtung der ersten Rotationsachse 32 eine maximale Breite B2 aufweist. Dabei ist der Breitenabstand B3 der ersten Fräser 30 größer als die maximale Breite B2 der Halterung 20. Der zweite Fräser 40 ist ein scheibenförmiges Fräsblatt mit umfangsseitig ausgebildeten Schneiden 44, wobei diese auf einem Schneidenkreis 46 liegen, der einen Durchmesser D aufweist, während der Fräser 40 in zwei seitlichen Bereichen 47, 48 abgeflacht ist und dort eine maximale Breite B4 aufweist. Diese ist kleiner als der Durchmesser D des Schneidenkreises 46 sowie kleiner oder gleich dem Breitenabstand B3 der ersten Fräser 30 ist. Ferner ist der Durchmesser D des Schneidenkreises 46 des zweiten Fräsers 40 größer als die maximale Breite B2 der Halterung 20.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 10 | Fräseranordnung | 84 | Lagerung |
| 20 | Halterung | 86 | Sicherungsstift |
| 22 | Haltearm | 88 | Bohrung |
| 24 | Gestell | 90 | Antriebswelle |
| 26 | Führungsschiene | 92 | Bohrung |
| 30 | erster Fräser | 94 | Nut |
| 31 | Schneide | 96 | Feder |
| 32 | erste Rotationsachse | 98 | Sehne |
| 40 | zweiter Fräser | 100 | Schnittpunkt |
| 42 | zweite Rotationsachse | | |
| 42' | zweite Rotationsachse | A | Abstand |
| 44 | Schneide | B1 | erste Breite |
| 45 | Schneidkante | B2 | zweite Breite |
| 46 | Schneidenkreis | B3 | Breitenabstand |
| 47 | Umfangsbereich | B4 | vierte Breite |
| 48 | Umfangsbereich | B5 | fünfte Breite |
| 51 | Seitenflanke | D | Durchmesser (Schneidenkreis) |
| 52 | Seitenflanke | E1 | Begrenzungsebene |
| 54 | Fräseraufnahme | E2 | Begrenzungsebene |
| 55 | Detektionselement | L | Längsachse (Halterung) |
| 56 | Vorsprung | M | Minimaltransversale |
| 57 | Umfangsrand/Detektionskulisse | R | Radialrichtung |
| 58 | Ausnehmung | R1 | erste Raumrichtung |
| 60 | zweiter Antrieb | R2 | zweite Raumrichtung |
| 62 | Anschluss | R3 | dritte Raumrichtung |
| 64 | Arretierungsmittel | S1 | Arbeitsstellung |
| 66 | Gegengeometrie | S2 | Ruhezustandsstellung |
| 70 | Fräsmodul | W1 | Ruhezustandswinkel |
| 72 | Segment | W2 | Ruhezustandswinkel |
| 74 | Schneidenkreis | Z | Zylinderraum |
| 76 | Sensor/Induktionssensor | α | Winkel |
| 78 | Sensorhalter | β | Winkelbereich |
| 80 | Schraube | | |
| 82 | Halteplatte | | |

## Patentansprüche

1. Fräseranordnung (10), für die Bearbeitung eines Kunststoffprofils,
▪ mit einer Halterung (20), wobei die Halterung (20) zumindest entlang einer Raumrichtung (R1, R2) beweg- und positionierbar gelagert ist,
▪ mit zwei ersten Fräsern (30), die einander gegenüberliegend seitlich in der Halterung (20) angeordnet sind und um eine erste Rotationsachse (32) drehbar gelagert sind, und
▪ mit zumindest einen zweiten Fräser (40), der in oder an der Halterung (20) um eine zweite Rotationsachse (42) drehbar angeordnet und mit der Halterung (20) beweg- und positionierbar ist,
▪ wobei die zweite Rotationsachse (42) des zweiten Fräsers (40) in einem Winkel (α) zur ersten Rotationsachse (32) der ersten Fräser (30) ausgerichtet ist, und
▪ wobei der Winkel (α) größer Null ist.

2. Fräseranordnung nach Anspruch 1, **dadurch gekennzeichnet, dass** der Winkel (α) ein rechter Winkel ist.

3. Fräseranordnung nach Anspruch 1 oder 2, **dadurch gekennzeichnet, dass** die zwei ersten Fräser (30) in Richtung der ersten Rotationsachse (32) einen Breitenabstand (B3) aufweisen, und dass die Halterung (20) in Richtung der ersten Rotationsachse (32) eine maximale Breite (B2) aufweist, wobei der Breitenabstand (B3) der ersten Fräser (30) größer ist als die maximale Breite (B2) der Halterung (20).

4. Fräseranordnung nach einem der vorhergehenden Ansprüche, **dadurch gekennzeichnet, dass** der zweite Fräser (40) ein scheibenförmiges Fräsblatt ist mit umfangsseitig ausgebildeten Schneiden (44).

5. Fräseranordnung nach Anspruch 4, **dadurch gekennzeichnet, dass** der zweite Fräser (40) umfangsseitig in wenigstens zwei Bereichen (47, 48) seitlich abgeflacht ist.

6. Fräseranordnung nach Anspruch 5, **dadurch gekennzeichnet, dass** die Schneiden (44) des zweiten Fräsers (40) auf einem Schneidenkreis (46) liegen, der einen Durchmesser (D) aufweist, wobei die wenigstens zwei Bereiche (47, 48) des Fräsers (40) derart ausgebildet und angeordnet sind, dass der Fräser (40) in diesen zwei Bereichen (47, 48) eine maximale Breite (B4) aufweist.

7. Fräseranordnung nach Anspruch 6, **dadurch gekennzeichnet, dass** die maximale Breite (B4) des zweiten Fräsers kleiner als der Durchmesser (D) des Schneidenkreises (46) ist.

8. Fräseranordnung nach Anspruch 6 oder 7, **dadurch gekennzeichnet, dass** die maximale Breite (B4) des zweiten Fräsers (40) kleiner oder gleich dem Breitenabstand (B3) der ersten Fräser (30) ist.

9. Fräseranordnung nach einem der Ansprüche 6 bis 8, **dadurch gekennzeichnet, dass** die maximale Breite (B4) des zweiten Fräsers (40) kleiner oder gleich der maximalen Breite (B2) der Halterung (20) ist.

10. Fräseranordnung nach einem der Ansprüche 6 bis 9, **dadurch gekennzeichnet, dass** der Durchmesser (D) des Schneidenkreises (46) des zweiten Fräsers (40) größer als die maximale Breite (B2) der Halterung (20) ist.

11. Fräseranordnung nach einem der Ansprüche 6 bis 10, **dadurch gekennzeichnet, dass** der Durchmesser (D) des Schneidenkreises (46) des zweiten Fräsers (40) größer als der Breitenabstand (B3) der ersten Fräser (30) ist.

12. Fräseranordnung nach einem der vorhergehenden Ansprüche, **dadurch gekennzeichnet, dass** für den zweiten Fräser (40) ein separater Antrieb (60) vorgesehen ist, welcher derart ausgebildet und ansteuerbar ist, dass der zweite Fräser (40) wahlweise in eine Arbeitsstellung (S1) oder in eine Ruhezustandsstellung (S2) bringbar ist, wobei der zweite Fräser (40) in der Arbeitsstellung (S1) um die zweite Rotationsachse (42) rotiert und wobei der zweite Fräser (40) in der Ruhezustandsstellung (S2) stillsteht und eine definierte Ausrichtung einnimmt.

13. Fräseranordnung nach Anspruch 12, **dadurch gekennzeichnet, dass** die definierte Ausrichtung des zweiten Fräsers (40) in der Ruhezustandsstellung (S2) derart ausgebildet ist, dass die Schneiden (44) auf dem Schneidenkreis (46) des zweiten Fräsers (40) nicht über den Breitenabstand (B3) der ersten Fräser (30) hinausragen.

14. Fräseranordnung nach einem der vorhergehenden Ansprüche, **dadurch gekennzeichnet, dass** wenigstens ein Sensor (76) vorgesehen ist, der wenigstens eine Drehstellung und/oder die definierte Ausrichtung des zweiten Fräsers (40) erfasst.

15. Fräseranordnung nach einem der vorhergehenden Ansprüche, **gekennzeichnet durch** ein Fräsmodul (70), welches den zweiten Fräser (40) umfasst, wobei das Fräsmodul (70) an oder in der Halterung (20) angeordnet ist, vorzugsweise vermittels einer Halteplatte (82).
